# EUROPEAN PATENT SPECIFICATION

(11) **EP 0 406 494 B1**
(45) Date of publication and mention of the grant of the patent: **06.10.1993**
(21) Application number: 89306934.4
(22) Date of filing: 07.07.1989
(51) Int. Cl.: B23C 1/10

(54) **An improvement for tool milling machine or the like type complex processing machine**
Fräsmaschinen oder ähnliche komplexe Bearbeitungsmaschinen
Fraiseuses ou machines à usiner complexes similaires

(43) Date of publication of application: 09.01.1991
(73) Proprietor: Tai-Her, Yang, Si-Hu Town Dzan-Hwa (TW)
(72) Inventor: Tai-Her, Yang, Si-Hu Town Dzan-Hwa (TW)
(74) Representative: Arthur, Bryan Edward

(56) References cited:
- CH-A- 456 306
- DE-C- 817 673
- FR-A- 1 122 466
- FR-A- 2 380 099

## Description

Conventional multi-functional tool milling machine often locates a cutter arm to support horizontal mill cutter rod and has a vertical spindle head unit with independent power, being located in the front end of cutter arm, and cutter rod support arm is attached to the machine body. Thus, for practical applications, it may only allow to select either vertical or horizontal process but not allow to obtain both types of process for continuous processing. Besides, to select horizontal process is required to dismount vertical spindle head unit and therefore it is not convenient for operation. The improvement according to present invention relates to locate guide rail on one side or both sides of horizontal cutter rod arm to couple with vertical cutter spindle head unit (including milling, boring, drilling, tapping, inserting, grinding spindle head unit) with independent power and enable vertical cutter spindle head unit shifting to and fro for processing and rear locating storage. Thus, when milling machine is engaged in processing the workpieces horizontally or vertically, machine body can be easily adjusted to be suitable for processing and further be suitable to continue proceeding in vertical/horizontal process works.

FR-A-1122466 on which is based the preamble of claim 1 discloses a milling machine having a removable horizontal spindle assembly driven by the milling machine, and a vertical spindle mounted separate from the horizontal spindle on the side of the milling machine. The horizontal spindle may be used while the vertical spindle is still attached.

### SUMMARY OF THE INVENTION

Present invention relates to an improvement for tool milling machine or the like type of complex processing machines, its features lie in: guide rails can be located along both sides or one side of arm on the top of machine body, which is provided for driving vertical cutter spindle head unit with independent power to move forward or backward, and vertical spindle head unit can be driven to be engaged in vertical processing or being stored on both sides of machine body and which will not impede horizontal spindle head unit processing.

The improvement stated above is achieved with a milling machine according to claim 1.

### BRIEF DESCRIPTION OF THE DRAWINGS

Fig. 1 is a diagramatic view of the embodiment showing a dual-purpose milling machine having vertical spindle head unit being located on lateral side, which is able to do vertical shifting according to present invention.

Fig. 2 is a diagramatic view of the embodiment showing milling machine as shown in Fig. 1 has vertical spindle head unit being located on another side according to present invention.

### DETAILED DESCRIPTION OF THE INVENTION

Tool milling machine has played a very important role in mechanic processing. Vertical milling machine is commonly used for plane milling or drilling, boring, or lateral end face milling. While horizontal milling machine is for milling the chute or milling polyfaces with different heights by cutter having varied diameters and further has processing functions such as internal hole key etc., being equipped inserting cut head, to fit for various utilities and to reduce the cost. In a known dual-purpose vertical/horizontal milling machine, through changing spindle head unit with different functions, people may allow to select one of functions, however, not only changing cut head of spindle head unit costs a great deal of time but also spindle head unit is not easy for storage.

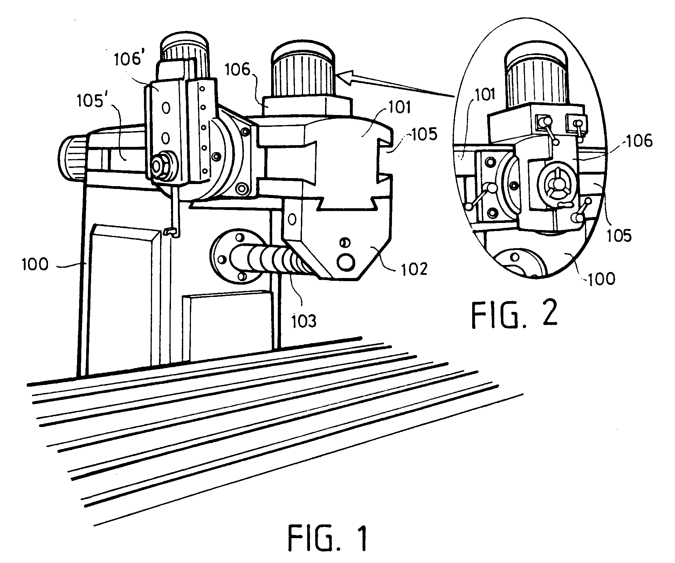

The improvement according to present invention relates to provide a new arrangement for basic structure of vertical and horizontal dual-purpose milling machine, and particularly to locate guide rails on one side or both sides of arm on the top of machine body, which are provided for coupling with different spindle head unit having independent power in order to obtain the third utility type except vertical or horizontal purposes. It not only enables vertical and horizontal dual-purpose milling machine further to have various types of spindle head unit but also further drives vertical spindle head unit moving to both sides of machine body without necessity for dismounting and is able to be engaged in vertical and horizontal continuous production. The major idea according to present invention as shown in Figs. 1 and 2 showing a dual-purpose milling machine has vertical side spindle head unit which is able to be engaged in longitudinal shifting, wherein, the top of a horizontal milling machine embodiment 100 has a cutter rod arm 101 which is adjustable from the front to the back, being provided for locating cutter rod support seat 102 to support horizontal milling cutter rod 103 and horizontal milling cutter is engaged in horizontal milling process. Its major feature lie in, at least one vertical side of cutter rod arm 101 has slide rails 105 and 105′ coupling with vertical spindle head unit 106 and 106′ with independent power, and guide screw (or the other linear shifting mechanic or fluid elements) is driven by motor or manpower to shift forward and backward for adjusting the position or cut-in or locking on guide rail; vertical cutter shaft or horizontal milling cutter appears non-interference location to obtain the following advantages:

Guide rails being located on the side (including both sides) of arm are provided for non-dismounting type selection of spindle head unit as well as for storing spindle head unit on lateral face of machine body;

It can combine digital electric control to make selection and shifting and feed quantity control for spindle head unit;

Continuous processing the workpieces including:
(1) Drilling or boring and later inserting for workpieces after finished by horizontal milling machine.
(2) Plane processing for the top of workpieces whose later face having been processed by horizontal milling machine.
(3) Plane or deep slot milling by longitudinal (back and forth) feeding for the workpieces whose lateral face having been processed by horizontal milling machine.
(4) Mixing application for the other type of process.

For utility, its design same as traditional vertical spindle head tool machine includes:
Spindle head unit can be a vertical structure or adjustable oblique angle;
Spindle head unit has an independent feed function;
Affixed digital control system, automatic cutter replacement and relevant mechanism to automatic exchange working table system and electric control system and servo drive and measurement detection elements;
Affixed digital control system including selection of two lateral spindle head unit and drive command and relevant electric control and servo drive and measurement detection elements.

To conclude the above-mentioned descriptions, the structure according to an embodiment of the present invention covers the features as below:

Machine embodiment has horizontal spindle head unit and arm movable from back to the forth (including power drive) and under the arm, there are slide rails groove being provided for coupling cutter rod of horizontal milling cutter; slide rails being located on one side or both sides, are provided for coupling motor spindle head unit with independent drive power for milling or boring or drilling or tapping or inserting or grinding etc.;

Slide rails groove being located on lateral face of arm is provided for the aforesaid cutter head storing on both sides of machine body but not interfering X axial work space of working table;

Position adjustment from back to forth or feed between spindle cutter head and arm can be driven by independent motor or fluid elements;

The aforesaid independent drive spindle head unit can be driven from back to forth by spindle motor; or if constant adjustment is not necessary, sliding position and locking between spindle head unit and horizontal cutter rod arm of the aforesaid independent drive spindle head unit can be pushed by manpower for direct coupling and no additional drive elements shall be located;

Working table of machine body can be fixed to move along X axis from the right to the left or to move along X axis from the right to the left plus Z axis moving back and forth, or further a mechanism movable along X aix from right to left, Y axis from back to forth and Z axis up and down;

Affixed digital control system, automatic cutter replacement system and relevant mechanism to automatic exchange working table and electric control and servo drive and measurement detection elements;

Affixed digital control system including selection of two lateral spindle head unit and drive command and relevant electric control and servo drive and measurement detection elements.

## Claims

1. A milling machine having a horizontal spindle head unit, a cutter rod arm (101), a vertical spindle unit (106), and independently operable driving means for vertical and horizontal movement of the vertical spindle unit (106), characterised in that the cutter rod arm (101) has at least one vertical side face provided with guide means (105) carrying the independently powered vertical spindle unit (106).

2. A milling machine according to claim 1 having guide means (105) and a vertical spindle unit (106) on both side faces of the cutter rod arm (101).

3. A milling machine according to claim 1 or claim 2 in which the cutter rod arm (101) is movable.

4. A milling machine according to any preceding claim in which the guide means (105) extends beyond the work space of the milling machine so that the vertical spindle unit (106) can be moved towards the rear of the machine to a storage position.

5. A milling machine according to any preceding claim in which the or each vertical spindle unit (106) is mounted for rotation to an oblique position.

6. A milling machine according to any preceding claims further including digital control means arranged to control the movement of the vertical spindle unit or units (106).

## Patentansprüche

1. Fräsmaschine mit einer horizontalen Spindelkopfeinheit, einem Fräserstabarm (101), einer Vertikalspindeleinheit (106) und unabhängig betätigbaren Antriebsmitteln für Vertikal- und Horizontalbewegung der Vertikalspindeleinheit (106), dadurch gekennzeichnet, daß der Fräserstabarm (101) wenigstens eine vertikale Seitenfläche aufweist, die mit Führungsmitteln (105) versehen ist, welche die unabhängig angetriebene Vertikalspindeleinheit (106) tragen.

2. Fräsmaschine nach Anspruch 1 mit Führungsmitteln (105) und einer Vertikalspindeleinheit (106) an beiden Seitenflächen des Fräserstabarms (101).

3. Fräsmaschine nach Anspruch 1 oder 2, bei welcher der Fräserstabarm (101) bewegbar ist.

4. Fräsmaschine nach irgendeinem vorstehenden Anspruch, bei welcher die Führungsmittel (105) sich über den Arbeitsraum der Fräsmaschine hinauserstrecken, so daß die Vertikalspindeleinheit (106) in den rückwärtigen Teil der Maschine in eine Stauposition bewegt werden kann.

5. Fräsmaschine nach irgendeinem vorstehenden Anspruch, bei welcher die oder jede Vertikalspindeleinheit (106) in eine Schräglage drehbar angebracht ist.

6. Fräsmaschine nach irgendeinem vorstehenden Anspruch, welche ferner digitale Steuermittel enthält, die für eine Steuerung der Bewegung der Vertikalspindeleinheit oder -einheiten (106) eingerichtet sind.

## Revendications

1. Fraiseuse comportant un bloc de tête de mandrin horizontal, un bras de tige de fraise (101), un bloc de mandrin vertical (106), et des moyens d'entraînement pouvant être actionnés indépendamment pour déplacer verticalement et horizontalement le bloc de mandrin vertical (106), caractérisée en ce que le bras de tige de fraise (101) comporte au moins une face latérale verticale munie de moyens de guidage (105) portant le bloc de mandrin vertical à commande indépendante (106).

2. Fraiseuse selon la revendication 1, caractérisée en ce qu'elle comprend des moyens de guidage (105) et un bloc de mandrin vertical (106) sur les deux faces latérales du bras de tige de fraise (101).

3. Fraiseuse selon l'une quelconque des revendications 1 ou 2, caractérisée en ce que le bras de tige de fraise (101) est mobile.

4. Fraiseuse selon l'une quelconque des revendications précédentes, caractérisée en ce que les moyens de guidage (105) s'étendent au-delà de l'espace de travail de la fraiseuse de façon qu'on puisse déplacer le bloc de mandrin vertical (106) vers l'arrière de la machine pour l'amener dans une position de rangement.

5. Fraiseuse selon l'une quelconque des revendications précédentes, caractérisée en ce que chacun des blocs de mandrin vertical (106) est monté de manière à pouvoir tourner pour venir dans une position oblique.

6. Fraiseuse selon l'une quelconque des revendications précédentes, caractérisée en ce qu'elle comprend en outre des moyens de commande numériques destinés à commander le mouvement du bloc ou des blocs de mandrins verticaux (106)
